# EUROPEAN PATENT APPLICATION

(11) **EP 4 628 615 A1**
(43) Date of publication of application: **08.10.2025**
(21) Application number: 24741259.6
(22) Date of filing: 09.01.2024
(51) Int. Cl.: C22C 38/06, C22C 38/04, C22C 38/02, C22C 38/00

(54) **HIGH MAGNETIC FLUX DENSITY AND LOW IRON LOSS NON-ORIENTED ELECTRICAL STEEL SHEET, AND MANUFACTURING METHOD THEREFOR**

(30) Priority: 10.01.2023 CN 202310032922
(71) Applicant: BAOSHAN IRON & STEEL CO., LTD., Shanghai 201900 (CN)
(72) Inventor: ZHANG, Feng, Shanghai 201900 (CN); LV, Xuejun, Shanghai 201900 (CN); FANG, Xianshi, Shanghai 201900 (CN); WANG, Bo, Shanghai 201900 (CN); CUI, Min, Shanghai 201900 (CN)
(74) Representative: Nederlandsch Octrooibureau
(86) International application number: PCT/CN2024/071433
(87) International publication number: WO 2024/149262

(57) **Abstract**

The present invention provides a non-oriented electrical steel plate with high magnetic induction and low iron loss, comprising the following components in percentage by mass: 0<C≤0.0030%, Si: 1.20-2.40%, Mn: 0.10-0.40%, Al: 0.10-0.60%; and the balance being Fe and inevitable impurities, wherein Si+Al: 1.30-2.80%. Correspondingly, the present invention also provides a method for manufacturing the non-oriented electrical steel plate with high magnetic induction and low iron loss, comprising the following steps: smelting and casting; heating; rough rolling, finishing rolling, and coiling: wherein passes for the rough rolling pass are controlled to 2-4 times, and a reduction rate at the final pass of the rough rolling is 51% - 67%; during a cooling process after the coiling stage, a cooling rate is controlled to be 1.0-4.0°C/min at a range of 400-650°C; cold rolling is performed directly after pickling without normalizing annealing; continuous annealing and applying an insulation coating.

## Description

### TECHNICAL FIELD

The present invention relates to a steel plate and a manufacturing method therefor, in particular to a non-oriented electrical steel plate and a manufacturing method therefor.

### BACKGROUND

With the increasingly stringent demands for energy conservation, consumption reduction, and environmental protection, non-oriented electrical steel plates-as raw and auxiliary materials for various motors, compressors, EI cores, and drive motors-are required to exhibit higher magnetic induction and lower iron loss while maintaining relatively low manufacturing costs.

In prior art, common methods for optimizing electromagnetic performance primarily include:
Increasing content of Si and Al in steel to effectively reduce iron loss, exemplified by the technical solution disclosed in Japanese Patent Application Publication 8-3699.

Implementing thin-slab continuous casting and rolling or thin-strip continuous casting to enhance magnetic induction of steel, exemplified by the technical solution disclosed in Chinese Patent CN1948517A (Publication Date: April 18, 2007; Title: "Manufacturing method of cold-rolled electrical steel for compressors").

Adding Ca, Mg, RE, Sn, Sb elements in steel to purify steel quality and improve favorable texture, exemplified by the technical solution disclosed in Chinese Patent CN1078270A (Publication Date: November 10, 1993; Title: "Non-oriented electrical steel plate with excellent magnetic performance and manufacturing method therefor").

Implementing normalizing annealing or intermediate annealing + secondary cold rolling to optimize favorable texture of steel, exemplified by the technical solution disclosed in Chinese Patent CN1370850A (Publication Date: September 25, 2002; Title: "High-magnetic-induction non-oriented electrical steel and manufacturing method therefor").

The main problem with the above methods is that the manufacturing process is complicated, the manufacturing cost is high, and it is necessary to additionally use continuous casting electromagnetic stirring, normalizing annealing and other measures to eliminate ridge defects.

### SUMMARY

An objective of the present invention is to provide a non-oriented electrical steel plate, wherein by optimizing the chemical composition design and process design of the steel, the resulting non-oriented electrical steel plate not only exhibits excellent electromagnetic properties but also achieves superior surface quality free from surface ridge defects.

In order to achieve the above objective, the present invention provides a non-oriented electrical steel plate, comprising the following components in percentage by mass: 0<C≤0.0030%, Si: 1.20-2.40%, Mn: 0.10-0.40%, Al: 0.10-0.60%; and the balance being Fe and inevitable impurities, wherein the content of Si+Al in percentage by mass is 1.30-2.80%.

Preferably, the inevitable impurities comprise S, N, O, and Ti, wherein the content of S, N, O, and Ti satisfies at least one of: S≤0.0020%, N≤0.0020%, O≤0.0020%, and Ti≤0.0010%.

The design idea for each element in the non-oriented electrical steel plate of the present invention are as follows:
C: C readily combines with Nb, V, and Ti to form fine carbide inclusions, which deteriorate the electromagnetic performance of the finished steel plate. Accordingly, in the non-oriented electrical steel plate of the present invention, the C content is controlled to be 0<C≤0.0030%, e.g., 0.0008%≤C≤0.0030% in percentage by mass. As an example, the upper limit of C content may alternatively be 0.0025%, etc.

Si: Si enhances the electrical resistivity of the material, thereby improving the electromagnetic performance of the finished steel plate. When the Si content is below 1.20%, it fails to sufficiently reduce iron loss, while exceeding 2.40% leads to a significant increase in manufacturing cost. Accordingly, in the non-oriented electrical steel plate of the present invention, the Si content is controlled to be 1.20-2.40% in percentage by mass. As an example, the lower limit of Si content may alternatively be 1.35%, 1.85%, etc., and the upper limit of Si content may be 2.37%, 2.20%, etc.

Mn: Mn combines with S to form MnS inclusions, thereby inhibiting the detrimental effects of S. When the Mn content is below 0.10%, it fails to adequately fix S, while exceeding 0.40% results in a significant increase in manufacturing cost. Accordingly, in the non-oriented electrical steel plate of the present invention, the Mn content is controlled to be 0.10-0.40% in percentage by mass. As an example, the lower limit of Mn content may alternatively be 0.12%, 0.18%, etc., and the upper limit of Mn content may be 0.35%, etc.

Al: Al enhances the electrical resistivity of the material, thereby improving the electromagnetic performance of the finished steel plate. When the Al content is below 0.10%, it fails to sufficiently reduce iron loss, while exceeding 0.60% leads to a significant increase in manufacturing cost. Accordingly, in the non-oriented electrical steel plate of the present invention, the Al content is controlled to be 0.10-0.60% in percentage by mass. As an example, the lower limit of Al content may alternatively be 0.18%, etc., and the upper limit of Al content may be 0.48%, etc.

In the present invention, the combined content of Si + Al is limited to 1.30-2.80% for the following reasons: When the total content of Si and Al is below 1.30%, the γ→α phase transformation occurs during the hot rolling process, resulting in a fully recrystallized hot-rolled structure so that ridge defects will not present. When the total content of Si and Al exceeds 2.80%, a normalizing annealing step must be added during the manufacturing process to improve magnetic induction, ensuring a fully recrystallized hot-rolled structure without ridge defects. Thus, what the present invention specifically addresses is to achieve a non-oriented electrical steel plate with excellent surface quality and free from ridge defects without the adoption of normalizing annealing when the total content of Si + Al falls within 1.30-2.80%. As an example, the lower limit of Si + Al content may alternatively be 1.83%, 2.28%, etc., while the upper limit of Si + Al content may be 2.72%, 2.41%, etc.

Preferably, the microstructure of the non-oriented electrical steel plate (i.e., the finished cold-rolled plate) in the present invention is ferrite equiaxed grains (fully recrystallized) with a regular morphology, a coarse size (average grain size 10-30 µm larger than conventional products of the same grade), and a uniform distribution. Preferably, the non-oriented electrical steel plate has an average grain size of 60-140 µm measured according to GB T 6394-2017.

Preferably, the non-oriented electrical steel plate of the present invention has a thickness of 0.35-0.65 mm.

Preferably, the non-oriented electrical steel plate of the present invention has an iron loss P_{15/50} of ≤3.60W/kg and a magnetic induction B₅₀ of ≥1.730T.

Another objective of the present invention is to provide a method for manufacturing the non-oriented electrical steel plate. By controlling the rough rolling passes and the reduction rate during hot rolling, and the cooling rate after hot rolling and coiling, a non-oriented electrical steel plate with high magnetic induction and low iron loss is obtained. The steel plate has excellent surface quality and free of ridge defects (i.e., wavy defects characterized by uneven thickness, uneven roughness, and ridge-like patterns along the rolling direction of the finished steel plate).

In order to achieve the above objective, the present invention provides a method for manufacturing the non-oriented electrical steel plate, comprising the following steps:
1) Smelting and casting;
2) Heating;
3) Rough rolling, finishing rolling, and coiling: passes of the rough rolling are 2-4 times, a reduction rate in the final pass of the rough rolling is 51%-67%; during a cooling process after the coiling, a cooling rate is controlled to be 1.0-4.0°C/min at a range of 400-650°C;
4) After pickling, cold rolling directly without normalizing annealing;
5) Continuous annealing and applying an insulation coating.

In the manufacturing method of the present invention, controlling a rough rolling pass during hot rolling to 2-4 times (e.g., 3-4 times) and a reduction rate in the final pass of the rough rolling to 51%-67% is to ensure completely break down of residual secondary columnar crystals in the intermediate slab, thereby providing a foundation for subsequent finishing rolling to form fully recrystallized and regularly shaped equiaxed grains. If the reduction rate in the final pass of the rough rolling exceeds 67%, excessive rolling load would be imposed, demanding higher equipment capabilities. At the same time, poor hot-rolled plate flatness may occur, increasing the risk of edge cracks. If the reduction rate in the final pass of the rough rolling is below 51%, residual secondary columnar crystals in the intermediate slab cannot be fully broken down. Subsequent finish rolling will still retain 5-20% of the coarse columnar crystals or equiaxed grains with a ratio of short to long axis greater than 4, which will deteriorate the electromagnetic performance of the finished steel plate and produce ridge defects.

In the manufacturing method of the present invention, controlling the cooling rate of the hot-rolled coil to be 1.0-4.0°C/min at the temperature range of 400-650°C is because: After sequential rough rolling, finish rolling, and coiling, the residual heat of the coil is utilized to promote the growth of recrystallized microstructures and achieve uniform equiaxed grain size in the steel. If the cooling rate is lower than 1.0°C/min, excessive oxide and nitride layers will form, which are detrimental to the electromagnetic performance of the finished steel plate; if the cooling rate is higher than 4.0°C/min, insufficient growth of recrystallized microstructure occurs, resulting in high proportion of {111} texture grains with poor orientation uniformity, which will be inherited to the cold-rolled and continuously-annealed finished steel plate, leading to ridge defects.

Preferably, in step (1), a molten steel from a blast furnace is sequentially subjected to molten steel pretreatment, converter smelting, RH refining, and continuous casting to obtain a continuous casting slab (e.g., the continuous casting slab has a target nominal thickness of about 230 mm).

Preferably, in step (1), a superheat of a molten steel is 15-45°C; and/or continuous casting is adopted for casting, and a resulting continuous casting slab has an equiaxed grain rate (i.e., the percentage of equiaxed grains relative to the total grains) of 18%-64%. Herein, equiaxed grains are measured in accordance with GB/T 226-2015 "Test method for macrostructure and defect of steel by etching".

Preferably, in step (2), a charging temperature is room temperature to 850°C and a tapping temperature is 1050-1200°C.

Preferably, in step (3), passes of the rough rolling is 2-4 times.

Preferably, in step (3), a finishing rolling temperature is 700-950°C.

Preferably, in step (3), a microstructure of a resulting hot-rolled steel plate is ferrite equiaxed grains with a recrystallization rate of 85-90%, which prevents the production of ridge defects while a normalizing annealing step is not required.

Preferably, in step (3), a coiling temperature is 550-780°C.

Preferably, in step (3), a thickness of a steel plate obtained by coiling is 2.0-2.6 mm.

Preferably, in step (5), a continuous annealing temperature is 820-980°C.

The non-oriented electrical steel plate and the manufacturing method thereof of the present invention have advantages as well as beneficial effects as described below:
By optimizing the chemical composition design of the steel, while controlling the rough rolling pass and the reduction rate during hot rolling, as well as the cooling rate after hot rolling and coiling, the non-oriented electrical steel plate obtained has an iron loss P_{15/50} of ≤3.60W/kg and a magnetic induction B₅₀ of ≥ 1.730T, while the steel plate has an excellent surface quality without ridge defects, and the manufacturing cost is low.

### BRIEF DESCRIPTION OF THE DRAWINGS

Figure 1 illustrates the relationship between the cooling rate after coiling and magnetic induction B₅₀ in the method for manufacturing the non-oriented electrical steel plate according to the present invention.
Figure 2 illustrates the relationship between the reduction rate in the final pass of rough rolling and the recrystallization rate in the method for manufacturing the non-oriented electrical steel plate according to the present invention.
Figure 3 shows the microstructure of the finished steel plate from Example 1 of the non-oriented electrical steel plate according to the present invention.
Figure 4 shows the microstructure of the finished steel plate from Comparative Example 1.

### DETAILED DESCRIPTION

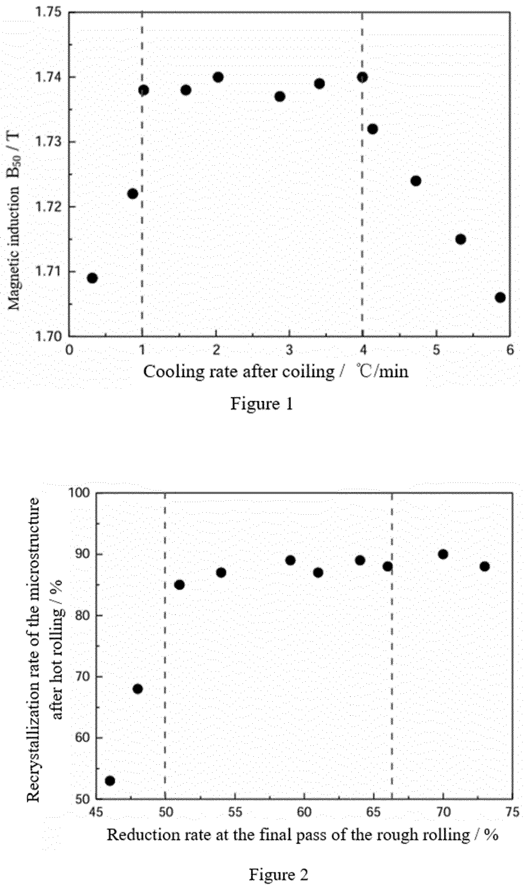

The inventors have discovered through research that with respect to the non-oriented electrical steel plate having the composition ratio specified in the present invention, the cooling rate after coiling exhibits a strong correlation with magnetic induction B₅₀. Figure 1 illustrates the relationship between the cooling rate after coiling and magnetic induction B₅₀ in the method for manufacturing the non-oriented electrical steel plate according to the present invention based on extensive experimental data.

As shown in Figure 1, when the cooling rate after coiling is higher than 1°C/min, the magnetic induction B₅₀ of the steel plate increases significantly. On the other hand, the cooling rate is not the higher the better, when the cooling rate is higher than 4°C/min, the magnetic induction B₅₀ of the steel plate decreases significantly.

Furthermore, the inventors have discovered through research that with respect to the non-oriented electrical steel plate having the composition ratio specified in the present invention, the reduction rate in the final pass of the rough rolling is strongly correlated with the surface quality of the finished steel plate. Figure 2 illustrates the relationship between the reduction rate in the final pass of the rough rolling and the recrystallization rate in the method for manufacturing the non-oriented electrical steel plate according to the present invention based on extensive experimental data.

As shown in Figure 2, when the reduction rate in the final pass of the rough rolling is 51%-67%, the recrystallization rate of the hot-rolled steel plate can be controlled at 85%-90%, effectively preventing ridge defects on the finished steel plate.

A more detailed explanation and illustration of the non-oriented electrical steel plate and its manufacturing method according to the present invention will be provided in conjunction with the following specific examples and the accompanying drawings of the specification. It is noted, however, that such explanations and illustrations shall not be construed as unduly limiting to the technical solution of the present invention.

### Examples 1-6 and Comparative Examples 1-2

Table 1 lists the chemical element contents of the electrical steel plates of Examples 1-6 and Comparative Examples 1-2.

**Table 1 (wt%, the balance being Fe and inevitable impurities except S, N, O and Ti)**

| No. | C | Si | Mn | Al | S | N | O | Ti | Al+Si |
|---|---|---|---|---|---|---|---|---|---|
| Example 1 | 0.0017 | 1.35 | 0.18 | 0.48 | 0.0018 | 0.0008 | 0.0011 | 0.0004 | 1.83 |
| Example 2 | 0.0030 | 2.37 | 0.35 | 0.18 | 0.0007 | 0.0010 | 0.0006 | 0.0006 | 2.72 |
| Example 3 | 0.0008 | 2.08 | 0.25 | 0.33 | 0.0011 | 0.0008 | 0.0009 | 0.0006 | 2.41 |
| Example 4 | 0.0025 | 1.20 | 0.29 | 0.10 | 0.0020 | 0.0020 | 0.0016 | 0.0002 | 1.30 |
| Example 5 | 0.0010 | 2.20 | 0.12 | 0.60 | 0.0016 | 0.0015 | 0.0008 | 0.0010 | 2.80 |
| Example 6 | 0.0028 | 1.85 | 0.40 | 0.43 | 0.0012 | 0.0019 | 0.0012 | 0.0006 | 2.28 |
| Comparative Example 1 | 0.0014 | 1.43 | 0.24 | ***1.71*** | ***0.0028*** | 0.0012 | 0.0014 | 0.0008 | ***3.14*** |
| Comparative Example 2 | 0.0022 | ***2.47*** | 0.16 | 0.31 | ***0.0022*** | 0.0010 | 0.0009 | 0.0008 | 2.78 |

The non-oriented electrical steel plates of Examples 1-6 of the present invention were all produced using the following steps:
(1) A molten steel from a blast furnace was sequentially subjected to molten steel pretreatment, converter smelting, RH refining, and continuous casting to obtain a continuous casting slab with a target nominal thickness of 230 mm.
(2) Heating: A charging temperature was room temperature to 850°C and a tapping temperature was 1050-1200°C;
(3) Rough rolling, finishing rolling, and coiling: wherein the passes of the rough rolling was controlled to 2-4 times, and a reduction rate in the final pass of the rough rolling was 51% - 67%; a finishing rolling temperature was 700-950°C; a coiling temperature was 550-780°C; during the cooling process after the coiling, a cooling rate was 1.0-4.0°C/min at a range of 400-650°C, and then naturally cooled;
(4) After pickling, cold rolling directly without normalizing annealing;
(5) Continuous annealing and applying an insulation coating under dry atmosphere condition; wherein a continuous annealing temperature was 820-980°C.

It should be noted that the manufacturing process of Comparative Example 1 was essentially the same as the Examples of the present invention. However, Comparative Example 1 did not undergo cooling after coiling, but was naturally cooled, and the process parameters for rough rolling did not meet the requirements of the present invention. The manufacturing process of Comparative Example 2 was basically the same as the Examples of the present invention. However, the process parameters of Comparative Example 2 for cooling after coiling did not meet the requirements of the present invention.

Table 2 lists the specific process parameters for the method for manufacturing the electrical steel plates of Examples 1-6 and Comparative Examples 1-2.

**Table 2**

| No. | Superheat of molten steel (°C) | Electrom agnetic stirring | Equiaxed grain rate of continuous casting slab (%) | Charging temperat ure (°C) | Tapping temperat ure (°C) | Rough rolling pass (times) | Reduction rate in the final pass of the rough rolling (%) | Thickness of intermediate slab after rough rolling (mm) | Finishing rolling temperat ure (°C) | Coiling temperat ure (°C) | Target nominal thickness of hot-rolled coil (mm) | Cooling rate within the cooling range (°C/min) |
|---|---|---|---|---|---|---|---|---|---|---|---|---|
| Example 1 | 23 | × | 18 | 351 | 1144 | 4 | 55 | 40 | 856 | 683 | 2.6 | 1.1 |
| Example 2 | 34 | √ | 57 | 294 | 1108 | 4 | 67 | 42 | 883 | 629 | 2.0 | 3.7 |
| Example 3 | 20 | × | 32 | 620 | 1121 | 3 | 58 | 50 | 932 | 708 | 2.3 | 2.4 |
| Example 4 | 15 | √ | 64 | Room Temperat ure | 1100 | 4 | 51 | 35 | 950 | 620 | 2.6 | 1.9 |
| Example 5 | 45 | × | 41 | 850 | 1051 | 4 | 63 | 45 | 835 | 780 | 2.3 | 3.8 |
| Example 6 | 32 | √ | 50 | 428 | 1198 | 4 | 67 | 40 | 700 | 550 | 2.0 | 2.7 |
| Comparative Example 1 | 28 | √ | 35 | 473 | 1149 | ***6*** | ***23*** | 35 | 852 | 653 | 2.6 | ***0.8*** |
| Comparative Example 2 | 32 | √ | 41 | 498 | 1113 | 4 | 55 | 45 | 848 | 581 | 2.3 | ***4.5*** |

| | | | | | | | | | | | | |
|---|---|---|---|---|---|---|---|---|---|---|---|---|
| Note: In Table 2, the " √" symbol in the "Electromagnetic stirring" column indicates that the electromagnetic stirring process was applied during continuous casting in the manufacturing method, whereas " ×" denotes that no electromagnetic stirring process was employed during continuous casting. | | | | | | | | | | | | |

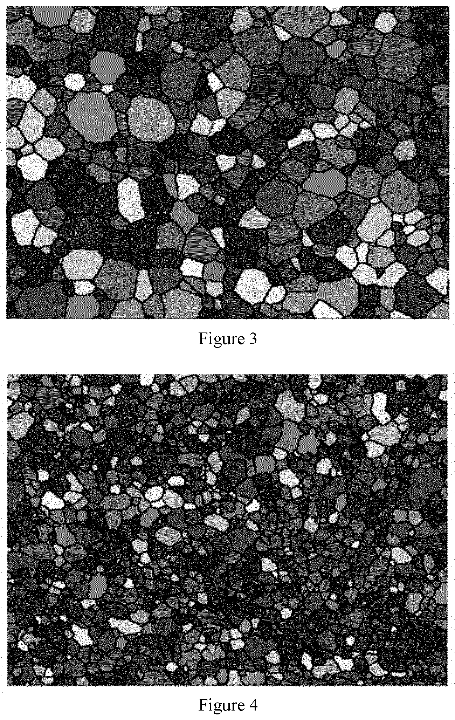

In order to analyze the non-oriented electrical steel plates according to the present invention, the finished steel plates of Example 1 and Comparative Example 1 were also sampled and their microstructures were analyzed. Figures 3 and 4 show the microstructure of the finished steel plates of Example 1 and Comparative Example 1 of the present invention, respectively.

As shown in Figure 3, the microstructure of the finished steel plate in Example 1 is fully recrystallized ferrite equiaxed grains characterized by regular morphology, coarse size and uniform distribution.

In contrast, as shown in Figure 4, although the microstructure of the finished steel plate in Comparative Example 1 is also fully recrystallized ferrite equiaxed grains, the grain size distribution is non-uniform, with localized segregation and fine grains.

In addition, the present invention also took samples of the non-oriented electrical steel plates of Examples 1-6 and the comparative steel plates of Comparative Examples 1-2, and observed the samples of the steel plates of each of the Examples and the Comparative Examples. The relevant various performances were tested. The results obtained from the observation and related performance tests are listed in Table 3, and the specific test methods for the related performances are described below:
Iron loss testing: In accordance with the national standard GB/T 3658-1990, the iron loss performance was evaluated using the Epstein frame method. Testing was performed under a constant temperature of 20°C, with specimen dimensions of 30 mm × 300 mm and a target mass of 0.5 kg. The test parameter is P_{15/50}.

Magnetic induction testing: In accordance with the national standard GB/T 3658-1990, the magnetic induction performance was evaluated using the Epstein frame method. Testing was performed under a constant temperature of 20°C, with specimen dimensions of 30 mm × 300 mm and a target mass of 0.5 kg. The test parameter is B₅₀.

Table 3 lists the observed and related performance test results for the non-oriented electrical steel plates of Examples 1-6 and the comparative steel plates of Comparative Examples 1-2.

**Table 3**

| No. | Finished product thickness (mm) | Average grain size (µm) | Ridge defect | Iron loss P_{15/50} (W/kg) | Magnetic induction B₅₀ (T) |
|---|---|---|---|---|---|
| Example 1 | 0.50 | 60 | × | 3.60 | 1.730 |
| Example 2 | 0.35 | 100 | × | 3.22 | 1.730 |
| Example 3 | 0.50 | 85 | × | 3.48 | 1.735 |
| Example 4 | 0.65 | 125 | × | 3.09 | 1.752 |
| Example 5 | 0.50 | 105 | × | 3.27 | 1.745 |
| Example 6 | 0.35 | 140 | × | 2.88 | 1.735 |
| Comparative Example 1 | 0.50 | ***30*** | √ | ***4.03*** | ***1.687*** |
| Comparative Example 2 | 0.35 | 125 | × | 2.92 | ***1.666*** |

Combined with Tables 1, 2 and 3, it can be seen that in Examples 1-6 which meet the design requirements of the present invention, due to the unique rough rolling process and the cooling control process after coiling adopted in the present invention, the final finished steel plate is free of ridge defects on the surface and has good electromagnetic performance with an iron loss P_{15/50} of ≤3.6 W/kg and an magnetic induction B₅₀ of ≥1.730T, while normalizing annealing was not adopted.

The rough rolling process of Comparative Example 1, on the other hand, does not meet the requirements of the present invention, resulting in the appearance of ridge defects on its surface.

The cooling rate after coiling of Comparative Example 2 was too high, resulting in its magnetic induction being lower than those of the Examples of the present invention.

It should be noted that the combination of the technical features herein is not limited to the combination described in the claims or the combination described in the specific examples. All technical features described herein can be freely combined in any way, unless contradicts with each other.

It should also be noted that the above-listed examples are only specific examples of the present invention. Obviously, the present invention should not be unduly limited to such specific examples. Similar changes or modifications that can be directly or easily derived from the present disclosure by those skilled in the art are intended to be within the protection scope of the present invention.

## Claims

1. A non-oriented electrical steel plate, comprising the following components in percentage by mass:
0<C≤0.0030%, Si: 1.20-2.40%, Mn: 0.10-0.40%, Al: 0.10-0.60%; and the balance being Fe and inevitable impurities, wherein the content of Si+Al in percentage by mass is 1.30-2.80%.

2. The non-oriented electrical steel plate as claimed in claim 1, wherein the inevitable impurities comprise S, N, O, and Ti, wherein the content of S, N, O, and Ti satisfies at least one of: S ≤ 0.0020%, N ≤ 0.0020%, O ≤ 0.0020%, and Ti ≤ 0.0010%.

3. The non-oriented electrical steel plate as claimed in claim 1, wherein the non-oriented electrical steel plate has a microstructure of ferrite equiaxed grain; preferably, the non-oriented electrical steel plate has an average grain size of 60-140 µm measured according to GB T 6394-2017.

4. The non-oriented electrical steel plate as claimed in claim 1, wherein the non-oriented electrical steel plate has a thickness of 0.35-0.65 mm.

5. The non-oriented electrical steel plate as claimed in claim 1, wherein the non-oriented electrical steel plate has an iron loss P_{15/50} of ≤3.60W/kg and a magnetic induction B₅₀ of ≥1.730T.

6. A method for manufacturing the non-oriented electrical steel plate as claimed in any one of claims 1-5, comprising the following steps:
1) Smelting and casting;
2) Heating;
3) Rough rolling, finishing rolling, and coiling: wherein passes of the rough rolling are 2-4 times, a reduction rate in the final pass of the rough rolling is 51%-67%; during a cooling process after the coiling, a cooling rate is controlled to be 1.0-4.0°C/min at a range of 400-650°C;
4) After pickling, cold rolling directly without normalizing annealing;
5) Continuous annealing and applying an insulation coating.

7. The method as claimed in claim 6, wherein in step (1), a superheat of a molten steel is 15-45°C; and/or continuous casting is adopted for casting, and a resulting continuous casting slab has an equiaxed grain rate of 18%-64%.

8. The method as claimed in claim 6, wherein in step (2), a charging temperature is room temperature to 850°C and a tapping temperature is 1050-1200°C.

9. The method as claimed in claim 6, wherein in step (3), a thickness of an intermediate slab after rough rolling is 35-50 mm; and/or a finishing rolling temperature is 700-950°C; and/or a microstructure of a resulting hot-rolled steel plate is ferrite equiaxed grains with a recrystallization rate of 85-90%.

10. The method as claimed in claim 6, wherein in step (3), a coiling temperature is 550-780°C; and/or a thickness of a steel plate obtained by coiling is 2.0-2.6 mm.

11. The method as claimed in claim 6, wherein in step (5), a continuous annealing temperature is 820-980°C.
